# EUROPEAN PATENT SPECIFICATION

(11) **EP 2 036 783 B1**
(45) Date of publication and mention of the grant of the patent: **22.09.2010**
(21) Application number: 07021667.6
(22) Date of filing: 07.11.2007
(51) Int. Cl.: B60R 21/215

(54) **Hinge assembly**
Scharnieranordnung
Ensemble de charnière

(30) Priority: 11.09.2007 GB 0717668
(43) Date of publication of application: 18.03.2009
(73) Proprietor: Delphi Technologies, Inc., Troy, Michigan 48007 (US)
(72) Inventor: Gundlach, Wolfgang, 44799 Bochum (DE); Kleinsimlinghaus, Heinz Werner, 45239 Essen (DE); Blockhaus, Frank, 42553 Velbert (DE)
(74) Representative: Manitz, Finsterwald & Partner GbR

(56) References cited:
- DE-A1- 19 962 551
- DE-A1-102004 010 643
- US-A- 5 393 089

## Description

The present invention relates to a lining component for use within a vehicle passenger compartment and comprises a hidden airbag door connected by a hinge assembly to the remainder of the lining component. Moreover, the present invention relates to a method of assembling such a lining component.

A lining component that comprises the features of the preamble of claim 1 is known from DE 10 2004 010 643 A1, e.g..

In a motor vehicle, there is a desire to provide an airbag door in a vehicle lining component as for example a dashboard, a door panel or a steering wheel hub such that the door is substantially invisible when viewed from inside the passenger compartment. The airbag door is generally attached to the vehicle lining component, on the inner surface thereof, by means of a metallic hinge assembly comprising stud plates, hinge plates, nuts and bolts, etc. The vehicle component is generally formed from laminated layers of plastics material. However, the combination of metallic and plastics components, with their differing thermal expansion coefficients and manufacturing tolerances, increases the risk of stress on the vehicle lining component, especially on the inner surface layer. This increase in stress may cause the risk of the airbag door being visible from inside the passenger compartment. There is also a requirement that the hinge assembly must be strong enough to withstand the forces exerted thereon during deployment of the airbag cushion.

It is an object of the present invention to overcome the above mentioned problems.

In a first aspect, the object underlying the invention is met by a lining component for use within a vehicle passenger compartment comprising the features of claim 1. Moreover, the object of the present invention is also met by a method comprising the steps of claim 8.

The lining component, in accordance with the present invention, for use within a vehicle passenger compartment, comprises a panel including an airbag door defined therein as well as a hinge assembly connecting said door to an adjacent portion of the panel. The hinge assembly comprises a flexible web, which preferably is formed as a separate part, which is attached to both a portion of the door and the adjacent panel portion. Thus, the hinge assembly does not comprise any metallic components, which is why the risk of the airbag door being visible from inside the passenger compartment is reduced due to the flexibility of the web and its corresponding thermal expansion coefficient.

The lining component further comprises a pair of reinforcement layers, which are secured to the door portion and to the adjacent panel portion, respectively, such that the flexible web is secured between each reinforcement layer and the corresponding portions of the door and the panel. The provision of these reinforcement layers may prove advantageous with respect to the resistance of the hinge assembly so as to withstand the forces generated during airbag deployment.

Advantageous embodiments of the lining component of the present invention will become apparent from the description, the drawings and the dependent claims.

According to another aspect of the present invention the flexible web of the hinge assembly may be attached to both the door portion and the adjacent panel portion by non-metallic means, such that the whole assembly is free from any metallic parts in favor of weight reduction.

Since it is desired to weld, bond or vulcanize the flexible web to both he door portion and the adjacent panel portion, the panel may comprises a layered structure according to a preferred embodiment, so that at least the layer next to the flexible web of said hinge assembly may be made of plastics, in particular of a thermoplastic material which is adapted to be weld, bonded or vulcanized.

To be able to secure the reinforcement layers concurrently with the above mentioned welding, bonding or vulcanizing process to both the door portion and the adjacent panel portion, respectively, the reinforcement layers may be made of plastics, in particular of a thermoplastic material. Preferably the reinforcement layers may be made of the same material as the layer of the panel next to the flexible web.

To still further improve the resistance of the hinge assembly, the flexible web of the hinge assembly may be made of a flexible cloth, preferably of a fiber fabric and in particular of a glass fabric or a carbon fiber fabric. Instead of using a flexible cloth for the hinge assembly, the hinge assembly may also comprise a flexible web or film material or any other suitable non-metallic member, which is adapted to be secured to both the door portion and the adjacent panel portion and to be able to perform the desired hinge-function.

According to yet another aspect of the present invention, said airbag door may be defined in said panel by a tear seam of reduced cross section, which is formed at least in the layer next to the flexible web of said hinge assembly. This may prove advantageous to that effect, that hereby the position of the door may be defined after assembling the lining component with the hinge assembly in the above illustrated manner.

According to the method of the present invention of assembling a lining component as illustrated above, a first section of the flexible web is positioned onto said the door portion; accordingly, a second section of the flexible web is positioned onto the adjacent panel portion; afterwards, both sections of the flexible web will then be secured to the corresponding portions of the door and the panel, respectively, by non-metallic means.

Advantageous embodiments of the method of the present invention will become apparent from the description, the drawings and the dependent method claims.

To improve the resistance of the hinge assembly produced in the above illustrated way, a first reinforcement layer may be positioning onto the first section of the flexible web; accordingly, a second reinforcement layer may be positioned onto the second section of the flexible web. Finally, both the first and second sections of the flexible web may then be secured to the corresponding portions of the door and the panel, respectively, by securing the first and second reinforcement layers to the door portion and the adjacent panel portion, respectively. This securing step of the first and second reinforcement layers is preferably carried out by ultrasonic welding.

The present invention removes the need for metallic components in the hinge assembly, which is particularly advantageous for the hinge assembly of an airbag door. In particular, an increase in the ease assembling the hinge assembly whilst maintaining invisibility of the door is achieved, and further whilst still providing enough strength to withstand the forces generated during airbag deployment. The present invention also helps to reduce the weight of the hinge assembly when compared to previously known arrangements.

The present invention will now be described, by way of example, with reference to the accompanying drawings, in which:

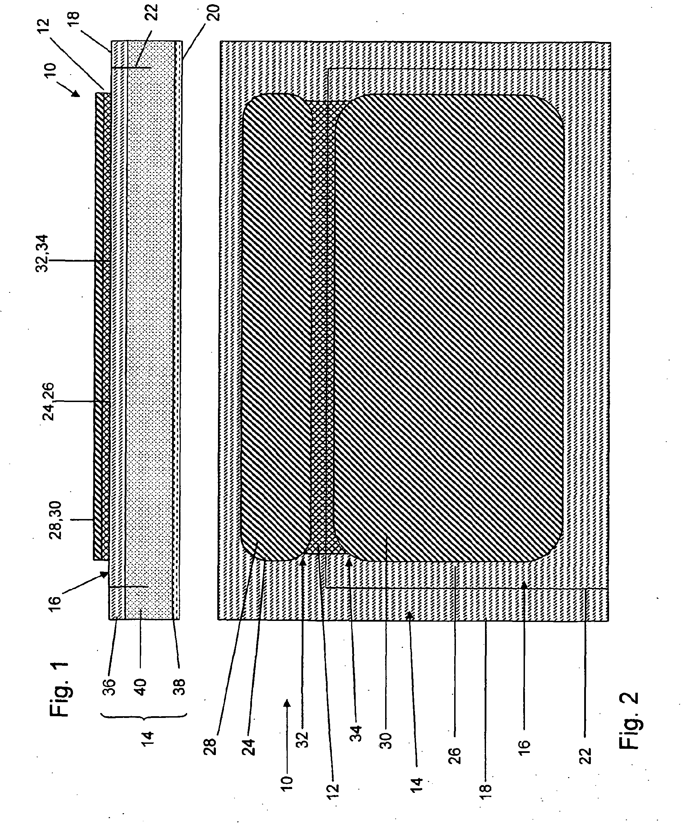

- Fig. 1: is a side view of a lining component in accordance with the present invention; and
- Fig. 2: is a top view of the lining component of Fig. 1.

Referring to the drawings, the lining component 10 of the present invention comprises a panel 14 including an airbag door 16 defined therein. The panel 14 has a laminated or layered structure comprising two or more layers of plastics material, with a first surface 18 and an opposed second surface 20. The lining component 10 further comprises a hinge assembly 12 connecting said door 16 to an adjacent portion of the panel 14. The hinge assembly 12 comprises a flexible web 12 attached to both a portion 26 of the door 16 and an adjacent panel portion 24. The flexible web 12 may be made of a fiber fabric, in particular of a glass fabric or a carbon fiber fabric.

The door 16 may be provided in the panel 14 by forming the outline of the door 16 at least in the first surface 18 of the panel 14. The definition of the door 16 is formed along a line 22 in the first surface 18 which is a line of reduced cross-section in the panel 14, but which does not extend to the second surface 20. Hence, the door may be opened along said line 22 during deployment of an airbag cushion, whereby the panel tears along said weakened line 22. In this manner, the door 16 is defined in the first surface 18 of the panel 14, but is substantially invisible in the second surface 20.

A section 32 of the web 12 is secured to a portion 24 of the first surface 18 of the panel 14 adjacent the door 16, and another section 34 of the web 12 is secured to a portion 26 of the first surface 18 of the door 16. The sections 32, 34 of the web 12 may be directly secured to the portions 24, 26 of the panel 14 and the door 16, respectively. For example, the sections 32, 34 of the web 12 may be welded, bonded or vulcanized to the portions 24, 26 of the panel 14 and the door 16, respectively.

Alternatively, reinforcement layers 28, 30 of plastics, preferably of a thermoplastic material, may be positioned over, and secured to the portions 24, 26 respectively, with the sections 32, 34 of the web 12 located and secured between the layers 28, 30 and the portions 24, 26, respectively.

The web 12 may be secured to the portions 24, 26 by any suitable method, but is preferably secured by an ultrasonic welding process. In the latter case, where the reinforcement layers 28, 30 are present, the reinforcement layers are preferably also secured to the portions 24, 26 by said ultrasonic welding process, and preferably simultaneously with the sections 32, 34 of the web 12.

The ultrasonic welding processes preferably comprises a combination of heat and vibration using a multiple pin tool in which the pins of the tool are pushed through the reinforcement layers 28, 30 - when present -, through the sections 32, 34 of the web 12 and into the portions 24, 26 of the first surface 18 of the panel 14 and the door 16, respectively. The depth of insertion of the plurality of pins is predetermined so as to ensure that the pins do not penetrate through the panel 14, and door 16 therein, to the second surface 20.

Alternatively, a different type of welding may be used to secure the sections 32, 34 of the web 12, and the reinforcement layers 28, 30 - when present-, to the portions 24, 26 of the panel 14 and the door 16, respectively. Further alternatives may include the use of a suitable adhesives rather than welding.

The panel 14 and the door 16 defined therein, preferably comprise a lamination of a first layer 36, a skin 38 and an intermediate foam layer 40 between the first layer 36 and the skin 38. The first layer 36 is preferably made of a thermoplastic material and defines the first surface 18. For example, the first layer 36 may be made of polyethylene (PE), polycarbonate (PC), polystyrene (PS), polyvinyl chloride (PVC) or polyamide (PA). The skin 38 may, for example, be made of polyurethane, PVC, TPO or the like and defines the second surface 20.

The design of the reinforcement layers 28, 30 can be predetermined to adjust or control the opening behaviour of the door 16. The lack of metallic parts for the hinge assembly 12 removes the risk of thermal stress between the various components. The present invention also eases formation of a hidden door 16 in the panel 14, when viewed from the opposite side to the hinge assembly 12, that is from the second surface 20.

### Reference numeral list

- 10: lining component
- 12: web
- 14: panel
- 16: door
- 18: first surface
- 20: second surface
- 22: tear seam
- 24: panel portion
- 26: door portion
- 28: reinforcement layer
- 30: reinforcement layer
- 32: panel section of 12
- 34: door section of 12
- 36: first layer
- 38: skin layer
- 40: intermediate layer

## Claims

1. A lining component (10) for use within a vehicle passenger compartment, comprising:
- a panel (14) comprising a door (16) defined therein; and
- a hinge assembly (12) connecting said door (16) to an adjacent portion (24) of the panel (14);
wherein the hinge assembly (12) comprises a flexible web (12) attached to both a portion (26) of the door (16) and the adjacent panel portion (26);
**characterized by**
a pair of reinforcement layers (28, 30), wherein one reinforcement layer (30) being secured to the door portion (26) and the other reinforcement layer (28) being secured to the adjacent panel portion (24), with the flexible web (12) secured between each reinforcement layer (28, 30) and the corresponding portions (24, 26) of the door (16) and the panel (14).

2. The lining component in accordance with claim 1,
**characterized in that** the flexible web (12) of the hinge assembly is attached to both the door portion (26) and the adjacent panel portion (24) by non-metallic means.

3. The lining component in accordance with claim 2,
**characterized in that** said non-metallic means are welds, in particular ultrasonic welds, bonds or vulcanizations.

4. The lining component in accordance with at least one of the preceding claims,
**characterized in that** the panel (14) comprises a layered structure, wherein at least the layer (36) next to the flexible web (12) of said hinge assembly is made of plastics, in particular of a thermoplastic material.

5. The lining component in accordance with at least one of claims 1 to 4,
**characterized in that** said reinforcement layers (28, 30) are made of plastics, in particular of a thermoplastic material and preferably of the same material as the layer (36) of the panel (14) next to the flexible web (12).

6. The lining component in accordance with at least one of the preceding claims,
**characterized in that** said flexible web (12) is made of a cloth, preferably of a fiber fabric and most preferably of a glass fabric or a carbon fiber fabric.

7. The lining component in accordance with at least one of the preceding claims,
**characterized in that** said door (16) is defined in said panel (14) by a tear seam (22) of reduced cross section formed at least in the layer (36) next to the flexible web (12) of said hinge assembly.

8. A method of assembling a lining component (10) in accordance with at least one of the preceding claims, comprising the steps of:
- positioning a first section of the flexible web (12) onto said the door portion (26);
positioning a second section of the flexible web (12) onto the adjacent panel portion (24); and
- securing both sections of the flexible web (12) to the corresponding portions (24, 26) of the door (14) and the panel (14), respectively, by non-metallic means;
the method further comprising the step of:
positioning a first reinforcement layer (30) onto the first section of the flexible web (12);
positioning a second reinforcement layer (28) onto the second section of the flexible web (12); and
securing the first and second sections of the flexible web (12) to the corresponding portions (24, 26) of the door (16) and the panel (14), respectively, by securing the first and second reinforcement layers (28, 30) to the door portion (26) and the adjacent panel portion (24), respectively.

9. The method of claim 8,
**characterized in that** the securing step of the first and second reinforcement layers (28, 30) is carried out by an ultrasonic welding process.

## Patentansprüche

1. Verkleidungskomponente (10) zur Verwendung in einem Fahrzeuginsassenraum, umfassend:
- ein Flächenelement (14) mit einer darin definierten Tür (16);
und
- eine Scharnieranordnung (12), die die Tür (16) mit einem benachbarten Abschnitt (24) des Flächenelements (14) verbindet;
wobei die Scharnieranordnung (12) eine flexible Bahn (12) aufweist, die an sowohl einem Abschnitt (26) der Tür (16) als auch dem benachbarten Flächenelementabschnitt (26) befestigt ist; **gekennzeichnet durch**
ein Paar von Verstärkungsschichten (28, 30), wobei eine Verstärkungsschicht (30) an dem Türabschnitt (26) angebracht ist und die andere Verstärkungsschicht (28) an dem benachbarten Flächenelementabschnitt (24) angebracht ist, wobei die flexible Bahn (12) zwischen jeder Verstärkungsschicht (28, 30) und den entsprechenden Abschnitten (24, 26) der Tür (16) und des Flächenelements (14) angebracht ist.

2. Verkleidungskomponente nach Anspruch 1,
**dadurch gekennzeichnet, dass** die flexible Bahn (12) der Scharnieranordnung an sowohl dem Türabschnitt (26) als auch dem benachbarten Flächenelementabschnitt (24) durch ein nichtmetallisches Mittel befestigt ist.

3. Verkleidungskomponente nach Anspruch 2,
**dadurch gekennzeichnet, dass** das nichtmetallische Mittel Schweißnähte, insbesondere Ultraschallschweißnähte, Verklebungen oder Vulkanisierungen sind.

4. Verkleidungskomponente nach einem der vorhergehenden Ansprüche,
**dadurch gekennzeichnet, dass** das Flächenelement (14) einen schichtartigen Aufbau umfasst, wobei zumindest die Schicht (36) am Nächsten zu der flexiblen Bahn (12) der Scharnieranordnung aus Kunststoff, insbesondere aus einem thermoplastischen Material besteht.

5. Verkleidungskomponente nach einem der Ansprüche 1 bis 4,
**dadurch gekennzeichnet, dass** die Verstärkungsschichten (28, 30) aus Kunststoff, insbesondere aus einem thermoplastischen Material und bevorzugt demselben Material wie die Schicht (36) des Flächenelements (14) am Nächsten zu der flexiblen Bahn (12) bestehen.

6. Verkleidungskomponente nach einem der vorhergehenden Ansprüche,
**dadurch gekennzeichnet, dass** die flexible Bahn (12) aus einem Stoff, bevorzugt einem Fasergewebe und am bevorzugtesten aus einem Glasfaser- oder einem Kohlefasergewebe besteht.

7. Verkleidungskomponente nach einem der vorhergehenden Ansprüche,
**dadurch gekennzeichnet, dass** die Tür (16) in dem Flächenelement (14) durch eine Reißnaht (22) mit reduziertem Querschnitt definiert ist, die zumindest in der Schicht (36) am Nächsten zu der Flexiblen Bahn (12) der Scharnieranordnung geformt ist.

8. Verfahren zum Zusammenbauen einer Verkleidungskomponente (10) nach einem der vorhergehenden Ansprüche, umfassend die Schritte, dass:
- ein erster Teil der flexiblen Bahn (12) an dem Türabschnitt (26) positioniert wird;
ein zweiter Teil der flexiblen Bahn (12) an dem benachbarten Flächenelementabschnitt (24) positioniert wird; und
- beide Teile der flexiblen Bahn (12) an den entsprechenden Abschnitten (24, 26) der Tür (14) bzw. des Flächenelements (14) durch ein nichtmetallisches Mittel angebracht werden;
wobei das Verfahren ferner den Schritt umfasst, dass:
eine erste Verstärkungsschicht (30) an dem ersten Teil der flexiblen Bahn (12) positioniert wird;
eine zweite Verstärkungsschicht (28) an dem zweiten Teil der flexiblen Bahn (12) positioniert wird; und
der erste und zweite Teil der flexiblen Bahn (12) an den entsprechenden Abschnitten (24, 26) der Tür (16) bzw. des Flächenelements (14) durch Anbringen der ersten und zweiten Verstärkungsschicht (28, 30) an dem Türabschnitt (26) bzw. dem benachbarten Flächenelementabschnitt (24) angebracht werden.

9. Verfahren nach Anspruch 8,
**dadurch gekennzeichnet, dass** der Anbringungsschritt der ersten und zweiten Verstärkungsschicht (28, 30) durch einen Ultraschallschweißprozess ausgeführt wird.

## Revendications

1. Composant de doublage (10) à utiliser dans un compartiment passager d'un véhicule, comprenant :
- un panneau (14) comprenant une porte (16) définie dans celui-ci ; et
- un ensemble formant charnière (12) qui relie ladite porte (16) à une portion adjacente (24) du panneau (14) ;
dans lequel l'ensemble formant charnière (12) comprend un voile flexible (12) attaché à la fois à une portion (26) de la porte (16) et à la portion de panneau adjacente (26) ;
**caractérisé par**
une paire de couches de renforcement (28, 30), dans lesquelles une couche de renforcement (30) est attachée à la portion de porte (26) et l'autre couche de renforcement (28) est attachée à la portion de panneau adjacente (24), avec le voile flexible (12) attaché entre chaque couche de renforcement (28, 30) et les portions correspondantes (24, 26) de la porte (16) et du panneau (14)

2. Composant de doublage selon la revendication 1,
**caractérisé en ce que** le voile flexible (12) de l'ensemble formant charnière est attaché à la fois à la portion de porte (26) et à la portion de panneau adjacente (24) par des moyens non métalliques.

3. Composant de doublage selon la revendication 2,
**caractérisé en ce que** lesdits moyens non métalliques sont des soudures, en particulier des soudures aux ultrasons, des collages ou des vulcanisations.

4. Composant de doublage selon l'une au moins des revendications précédentes,
**caractérisé en ce que** le panneau (14) comprend une structure en couches, dans laquelle au moins la couche (36) voisine du voile flexible (12) dudit ensemble formant charnière est réalisée en matière plastique, en particulier en une matière thermoplastique.

5. Composant de doublage selon l'une au moins des revendications 1 à 4,
**caractérisé en ce que** lesdites couches de renforcement (28, 30) sont réalisées en matière plastique, en particulier en une matière thermoplastique, et de préférence de la même matière que la couche (36) du panneau (14) voisine du voile flexible (12).

6. Composant de doublage selon l'une au moins des revendications précédentes,
**caractérisé en ce que** ledit voile flexible (12) est réalisé en un tissu, de préférence un textile en fibres, et de façon plus préférée un textile en verre ou un textile en fibres de carbone.

7. Composant de doublage selon l'une au moins des revendications précédentes,
**caractérisé en ce que** ladite porte (16) est définie dans ledit panneau (14) par une jointure déchirable (22) à section transversale réduite, formée au moins dans la couche (36) voisine du voile flexible (12) dudit ensemble formant charnière.

8. Procédé pour assembler un composant de doublage (10) selon l'une au moins des revendications précédentes, comprenant les étapes consistant à :
- positionner un premier tronçon du voile flexible (12) sur ladite portion de porte (26) ;
- positionner un second tronçon du voile flexible (12) sur la portion de panneau adjacente (24) ; et
- attacher les deux tronçons du voile flexible (12) sur les portions correspondantes (24, 26) de la porte (16) et du panneau (14) respectivement, par des moyens non métalliques ;
le procédé comprenant en outre les étapes consistant à :
positionner une première couche de renforcement (30) sur le premier tronçon du voile flexible (12) ;
positionner une seconde couche de renforcement (28) sur le second tronçon du voile flexible (12) ; et
attacher le premier et le second tronçon du voile flexible (12) sur les portions correspondantes (24, 26) de la porte (16) et du panneau (14), respectivement, en attachant la première et la seconde couche de renforcement (28, 30) sur la portion de porte (26) et la portion de panneau adjacente (24) respectivement.

9. Procédé selon la revendication 8,
**caractérisé en ce que** l'étape consistant à attacher la première et la seconde couche de renforcement (28, 30) est effectuée par un processus de soudage aux ultrasons.
